# EUROPEAN PATENT APPLICATION

(11) **EP 0 707 257 A1**
(43) Date of publication of application: **17.04.1996**
(21) Application number: 95307015.8
(22) Date of filing: 03.10.1995
(51) Int. Cl.: G06F 3/023

(54) **Touch-sensitive screen with mechanical selectable label-displays**

(30) Priority: 11.10.1994 US 320355
(71) Applicant: AT&T Corp., New York, NY 10013-2412 (US)
(72) Inventor: Blonder, Greg E., Summit, New Jersey 07901 (US)
(74) Representative: Buckley, Christopher Simon Thirsk

(57) **Abstract**

A multi-function device such as a combined PDA and wireless display telephone (20) uses a display and input device (30) that includes a touch-sensitive membrane (10) underlayed by a manually-operated mechanical label-display arrangement (15) to display different sets of touch-area labels (18) that correspond to the different functions. A display screen (11) is retained as the underlay for a portion of the touch-sensitive membrane to display touch-area labels that must be changed automatically and dynamically, and to display output information. Each set of labels (18) is defined by a different physical display surface, each formed from a plurality of movable aligned surface portions. A linkage translates operation of a manual actuator (19) into motion of the surface portions such that, in each predefined position of the actuator, the surface portions of a different surface are aligned with each other and face the touch-sensitive membrane in front of the surface portions of the other surfaces.

## Description

### Technical Field

The invention relates to a display and input device that is used as a user interface for equipment having a plurality of different functions.

### Background of the Invention

Conventional electronic equipment, such as wireless telephones and portable computers, has until recently been constructed and used as discrete and independent individual devices. However, with current advances in technology, combined equipment which incorporates multiple functions in a single device is now coming into practical use. An illustrative example thereof is the AT&T/EO personal digital assistant (PDA), which combines the functions of a cellular telephone and a notebook computer in a single portable device.

As electronic devices expand in functionality while also shrinking in size, the number of conventional push-buttons or keys that are needed to operate these devices grows while the area available on the devices for mounting these push-buttons or keys shrinks. Hence, the push-buttons and keys are shrinking in size to fit the available mounting areas. But the size of fingers of the user of these devices remains the same, with the net result being that the keys and push-buttons are getting too small to be used effectively.

Some solutions to this problem already exist. One solution uses pen input instead of a keyboard, as is already being done on many PDAs. Another approach underlays a touch-sensitive membrane with a display screen that displays the labels of the touch areas of the touch-sensitive membrane, to form a touch-sensitive screen. The touch areas are actuators defined by the touch-sensitive membrane. At any time, the touch-sensitive membrane's touch areas are reconfigured under program control to correspond to only the particular control and input functions required at that time, and the labels displayed by the display screen are changed accordingly at the same time. Hence, only a subset of the full set of actuators is presented to the user at any one time. An illustrative example of this latter approach is described in U. S. Pat. No. 4,896,223.

However, both of the above approaches have serious flaws. On one hand, it is very difficult to get the same level of input accuracy, and hence also control accuracy, with a pen as with a keyboard. This has been a major reason behind the limited acceptance in the marketplace of pen-based PDAs until now. On the other hand, display-screen underlays for touch-sensitive membranes are quite expensive, because the display screen must normally be as large as the touch-sensitive membrane, and display screens are usually an order of magnitude more expensive than touch-sensitive membranes of the same size.

### Summary of the Invention

This invention is directed to solving these and other problems and disadvantages of the prior art. Illustratively according to the invention, a display and input device provides the functionality of a touch-sensitive membrane underlayed with a display, but does so in a cost-effective manner by replacing some or all of the underlay display screen that is used by the prior art with a mechanical underlay display arrangement. A display screen is preferably retained to display those touch-area labels that must be changed dynamically and automatically, as well as to present output information to the user. But these functions typically require a display screen that is small in size relative to the total area of the touch-sensitive membrane. The mechanical display arrangement can be made simple, and consequently can be much less expensive than a display screen of comparable size. And while the mechanical display arrangement may not be as versatile as the display screen in terms of the number of different images that it can display, it relies on and takes advantage of the fact that many applications of display and input devices need only a limited, small, number of fixed sets of labels and hence do not require the full versatility of the display screen.

Generally according to the invention, a multi-functional device comprises: circuitry for effecting a plurality of functions, each function having a different display image corresponding thereto; a plurality of physical display surfaces cooperating to define the display images, at least some of the surfaces being movable to make any selected one of the images visible to a user of the device while others of the images are obscured from the user; an actuator operable by the user coupled to the surfaces such that operation of the actuator results in movement of at least some of the surfaces, the actuator having a plurality of positions each corresponding to a different one of the functions wherein in each of the positions the one of the images that corresponds to the function to which the position also corresponds is visible to the user while the others of the images are obscured from the user, and transition of the actuator from one of the positions to another of the positions results in the image that is visible to the user in the one position becoming obscured from the user and further results in the image that is visible to the user in the other position becoming visible to the user; and a controller coupled to the circuitry to cause the circuitry to effect the selected one of the functions.

Illustratively, a multi-functional device comprises: circuitry for effecting a plurality of functions, each function having a different display image corresponding thereto; a plurality of physical display surfaces each bearing a different one of the images, at least some of the surfaces being movable to make any selected one of the surfaces visible to a user of the device while others of the surfaces are obscured from the user; an actuator operable by the user, coupled to the surfaces such that operation of the actuator results in movement of at least some of the surfaces, the actuator having a plurality of positions each corresponding to a different one of the functions wherein in each of the positions the one of the surfaces bearing the image that corresponds to the function to which the position also corresponds is visible to the user while the others of the surfaces are obscured from the user, and transition of the actuator from one of the positions to another of the positions results in the surface that is visible to the user in the one position becoming obscured from the user and further results in the surface that is to be visible to the user in the other position becoming visible to the user; and a controller coupled to the circuitry to cause the circuitry to effect the selected one of the functions.

Even though the multi-function device is an electrical or electronic device, it nevertheless employs a mechanical image-display arrangement controlled by a user-operated actuator to supplement its electrical or electronic functions so as to obtain the various advantages offered by the mechanical arrangement. These advantages are not only limited to lower cost, but include no electrical energy consumption, reliability, ruggedness, visibility in bright light, etc.

Preferably, the controller comprises an arrangement, such as an electrical switch that is a part of the actuator, that responds to the actuator being placed in any one of the positions by automatically causing the circuitry to effect the function corresponding to that position. The displayed image and the selected function of the device are thus automatically synchronized by means of the user's operation of the actuator.

Also preferably, the multi-functional device further comprises a touch-sensitive membrane defining touch areas (e.g., actuators) for the plurality of functions, and each image comprises labels for the touch areas defined by the touch-sensitive membrane for a different one of the functions. The multi-function device -- such as a combined PDA and wireless telephone, for example -- thus gains the benefits of the display and input device characterized above.

These and other advantages and features of the present invention will become more apparent from the following description of an illustrative embodiment of the invention taken together with the drawing.

### Brief Description of the Drawing

FIG. 1 is an exploded view of a block representation of a multi-function device that embodies an illustrative example of the invention;
FIGS. 2a-c are an architectural diagram of a first illustrative embodiment of the label-display arrangement of the device of FIG. 1;
FIGS. 3a-c are an architectural diagram of a second illustrative embodiment of the label-display arrangement of the device of FIG. 1;
FIG. 4 is an example of an image presented by the device of FIG. 1 when functioning as a telephone; and
FIG. 5 is an example of an image presented by the device of FIG. 1 when functioning as a PDA.

### Detailed Description

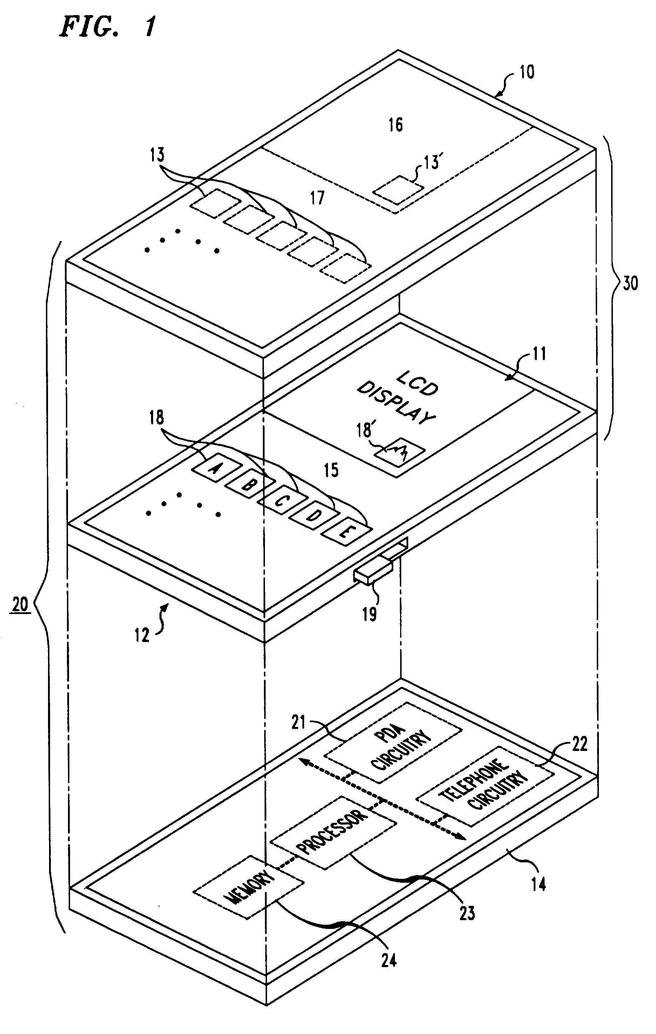

FIG. 1 shows an exploded view of a block representation of a multi-function device 20. Multi-function device 20 illustratively combines the functions of both a conventional personal digital assistant (PDA), such as personal-computer and electronic notebook functions, and a wireless telephone. Accordingly, device 20 includes a base portion 14 which carries conventional PDA circuitry 21 and conventional wireless telephone circuitry 22. Mounted on top of base portion 14 is a display and input device 30 that functions as a user input and output (I/O) interface to device 20 and that is constructed according to the principles of the invention. Device 30 is a touch-sensitive screen. It is made up of an input portion 10 that is underlayed by an output portion 12. Input portion 10 is a conventional touch-sensitive membrane. Output portion 12 comprises a conventional liquid-crystal display (LCD) screen 11 and a mechanical label-display arrangement 15. Touch-sensitive membrane 10 is transparent, so that both LCD screen 11 and label-display arrangement 15 are visible therethrough. LCD screen 11 displays the outputs of the functions of device 20 to the user, in a conventional manner. LCD screen 11 also cooperates with portion 16 of touch-sensitive membrane 10 in a conventional manner to display labels 18' of touch areas 13' that are defined in portion 16 of touch-sensitive membrane 10 by a processor 23. This type of cooperation is described, for example, in U. S. Pat. No. 4,896,223. Label-display arrangement 15 cooperates with portion 17 of touch-sensitive membrane 10 to display multiple selectable sets of labels 18 for touch areas 13 that are defined in portion 17 of touch-sensitive membrane 10 by processor 23. All portions of device 20 except for label-display arrangement 15 operate under control of processor 23, which executes control programs out of a memory 24, all in a conventional manner. Processor 23 and memory 24 are also contained in base portion 14.

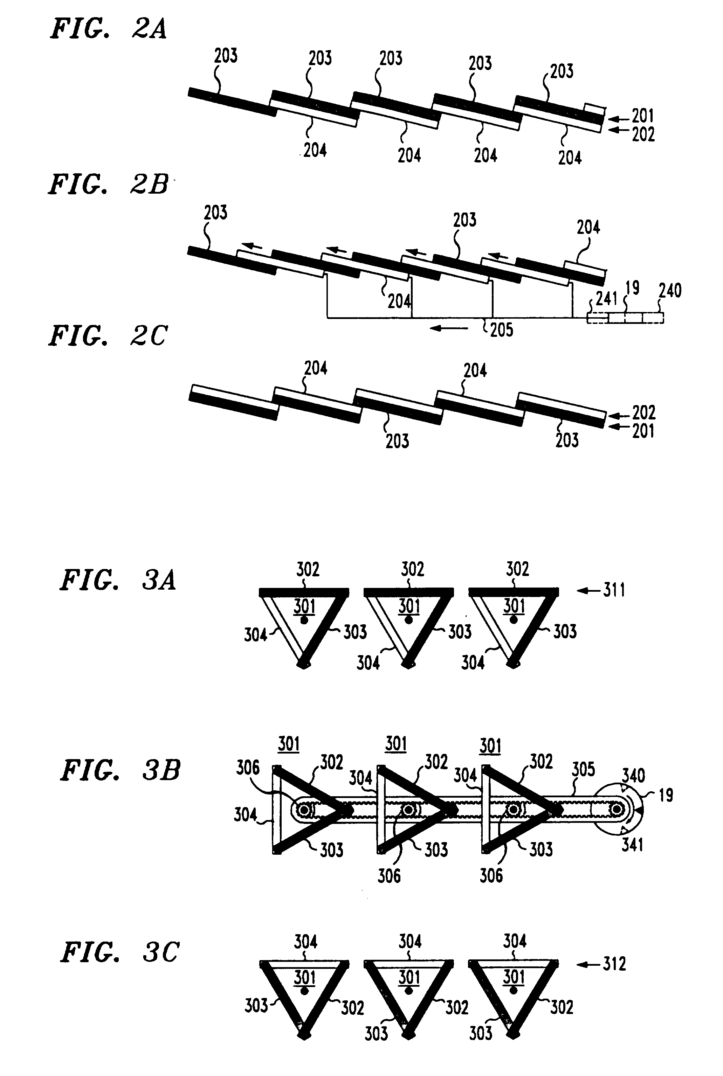

According to the invention, label-display arrangement 15 is mostly a mechanical device that displays labels 18, such as alpha-numeric characters, words, or icons, for corresponding touch areas 13 of portion 17 of touch-sensitive membrane 10. Label-display arrangement 15 also includes an actuator 19, such as a lever/switch combination, by means of which a user manually both selects one or the other of the functions of device 20 (i.e., either the PDA function or the telephone function) and changes the set of labels presently displayed by arrangement 15 to correspond to the touch areas 13 defined by device 20 for the selected function. The switch portion of actuator 19 electrically signals to processor 23 which one of the functions has been selected, in a conventional manner. In response, processor 23 activates the corresponding set of circuitry 21 or 22 and reconfigures touch-sensitive screen 10 to correspond to the selected function, also in a conventional manner. The lever portion of actuator 19 mechanically changes the set of labels displayed by arrangement 15. For an understanding of how that is accomplished, refer to FIGS. 2 and 3 and their accompanying description below.

FIGS. 2 and 3 show two alternative architectures for arrangement 15. The architecture of FIG. 2 uses a sliding mechanism, while the architecture of FIG. 3 uses a rotating mechanism; both are mechanical as opposed to electronic in nature. Both architectures also use the same mechanical principles. In each case, the set of labels corresponding to each different function is defined by a different physical display surface (e.g., 201 or 202 in FIG. 2, and 311, or 312 in FIG. 3). Each display surface is formed from a plurality of surface portions (e.g., 203 or 204 in FIG. 2, and 302 or 303 or 304 in FIG. 3), at least some of which are movable. The surface portions form a display surface when they are properly aligned with each other (e.g., as in FIG. 2a or 2c, and as in FIG. 3a or 3c). A linkage (e.g., 205 in FIG. 2, and 305 and 306 in FIG. 3) connects actuator 19 to at least some of the surface portions and translates operation of actuator 19 into motion of at least some of those surface portions such that, in each one of a plurality of predefined positions of actuator 19 (e.g., 240 and 241 in FIG. 2, and 340 and 341 in FIG. 3), the surface portions that form a different one of the display surfaces are aligned with each other and face touch-sensitive membrane 10 in front (relative to membrane 10) of the surface portions that form the other display surfaces.

The architecture of FIG. 2 uses two display surfaces, or layers, 201 and 202 of surface portions, or plates, 203 and 204, respectively. The plates 203 and 204 of the two layers are interleaved, and the plates 203/204 of each layer 201/202 slightly overlap each other like rows of roof shingles. This is best seen in FIG. 2b. The plates 203 of one layer 201 are stationary, while the plates 204 of the other layer 202 are movable with respect to the plates 203 of layer 201 by means of a linkage 205, but are stationary relative to each other. In other words, plates 204 of layer 202 move in unison. The plates 203/204 of each layer 201/202 define on their top surfaces a different set of touch-area labels. For example, the plates 203 of layer 201 carry the labels for the PDA function of device 20, while the plates 204 of layer 202 carry the labels for the telephone function. While actuator 19 is in a first position 240, the PDA function is selected, and plates 203 and 204 are in the relative position shown in FIG. 2a. In this position, plates 204 of layer 202 are obscured by (hidden underneath) plates 203 of layer 201, so that only the plates 203 and the labels carried thereby are visible through touch-sensitive membrane 10. When the user decides to switch from the PDA function to the telephone function, the user slides actuator 19 from the first position 240 to a second position 241. Actuator 19 is attached to plates 204 of layer 202 by a linkage such as a rod 205 so that the motion of actuator 19 from position 240 to position 241 slides plates 204 from under plates 203 and over plates 203 as shown in FIG. 2b. When actuator 19 is in the second position 241, the telephone function is selected, and plates 203 and 204 are in the relative position shown in FIG. 2c. In this position, plates 203 of layer 201 are hidden underneath plates 204 of layer 202, so that only the plates 204 and the labels carried thereby are visible through touch-sensitive membrane 10.

The architecture of FIG. 3 uses rotatable members 301 having a triangular cross section, so that each member 301 defines three surface portions 302-304. The members 301 are mounted to rotate in unison around their axis under the influence of a linkage 305 and 306, as shown in FIG. 3b. At least two sets of the surface portions 302, 303, and 304 constitute the surface portions of different display surfaces and define different sets of touch-area labels. For example, the surface portions 302 carry the labels for the PDA function of device 20, while the surface portions 303 carry the labels for the telephone function. While actuator 19 is in the first position 340, the PDA function is selected and members 301 are in the position shown in FIG. 3a. In this position, surface portions 302 are aligned to form a display surface 311. Surface portions 302 face touch-sensitive membrane 10 and hence the set of labels carried thereby is visible through touch-sensitive membrane 10, while surface portions 303 and 304 are hidden from view. When the user decides to switch from the PDA function to the telephone function, the user rotates actuator 19 from the first position 340 to the second position 341. Actuator 19 is attached to members 301 by a linkage illustratively comprising pulleys 306 and drive belt 305, so that the motion of actuator 19 from position 340 to position 341 rotates the members 301, as shown in FIG. 3b. When actuator 19 is in the second position 341, the telephone function is selected, and surface portions 304 of members 301 are aligned to form a display surface 312. Surface portions 304 face touch-sensitive membrane 10 and hence the set of labels carried thereby is visible through touch-sensitive membrane 10, while surface portions 302 and 303 are hidden from view, as shown in FIG. 3c.

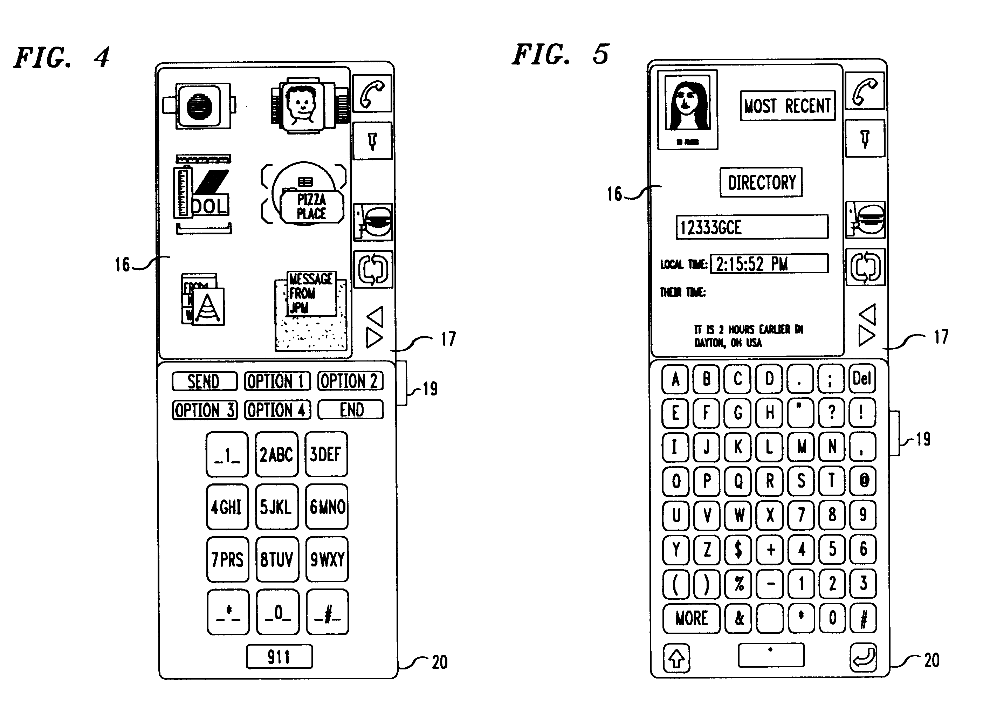

FIGS. 4 and 5 show examples of the images that a device 20 configured as described above may present to the user. FIG. 4 shows an illustrative image presented for the telephone function, while FIG. 5 shows an illustrative image presented for the PDA function.

Of course, various changes and modifications to the illustrative embodiment described above will be apparent to those skilled in the art. For example, the display surfaces that bear the labels may be fixedly positioned with respect to each other and overlayed by a movable display surface comprising an array of stamped lenses. The lenses make only a selected one of the sets of labels visible, depending upon the position of the lenses relative to the surfaces. Or, the display surfaces may comprise a single opaque surface overlayed by a movable transparent surface (e.g., a sheet of film), both of which are imprinted with a pattern of light and dark areas. As the opaque surface and the transparent surface are moved with respect to each other, the light and dark areas align and combine to reveal distinct images in each of the distinct actuator positions. Also, the touch-sensitive membrane need not be a physical membrane, but may be a virtual membrane defined, for example, by cooperation of an array of optical emitters and sensors, as is known in the art. Such changes and modifications can be made without departing from the spirit and the scope of the invention and without diminishing its attendant advantages. It is therefore intended that such changes and modifications be covered by the following claims.

## Claims

1. A device (20) comprising
circuitry (21-24) for effecting a plurality of functions, each function having a different display image (18) corresponding thereto, and
a controller (23) coupled to the circuitry to cause the circuitry to effect a selected one of the functions, CHARACTERISED BY
a plurality of physical display surfaces (201, 202; 311, 312) cooperating to define the display images (18), at least some of the surfaces (202; 311, 312) being movable to make any selected one of the images visible to a user of the device while others of the images are obscured from the user;
an actuator (19) operable by the user, coupled to the surfaces such that operation of the actuator results in movement of at least some of the surfaces, the actuator having a plurality of positions (240, 241; 340, 341) each corresponding to a different one of the functions wherein in each of the positions the one of the images that corresponds to the function to which the position also corresponds is visible to the user while the others of the images are obscured from the user, and transition of the actuator from one of the positions to another of the positions results in the image that is visible to the user in the one position becoming obscured from the user and further results in the image that is visible to the user in the other position becoming visible to the user.

2. The device of claim 1 wherein:
the controller comprises means responsive to the actuator being in any one of the positions, for automatically causing the circuitry to effect the function corresponding to that position.

3. The device of claim 1 further comprising
a touch-sensitive membrane (10) defining touch areas (13) for the plurality of functions; wherein
each image comprises labels (18) for the touch areas defined by the touch-sensitive membrane for a different one of the functions.

4. The device of claim 3 wherein:
the touch-sensitive membrane is transparent; and
the plurality of physical display surfaces underlie the touch-sensitive membrane such that said selected one of the images is visible to the user through the touch-sensitive membrane while others of the images are obscured from the user.

5. The device of claim 1 wherein:
the plurality of physical display surfaces each bears a different one of the images, and the movable surfaces are movable to make any selected one of the surfaces visible to the user while others of the surfaces are obscured from the user; and
in each of the positions of the actuator, the one of the surfaces bearing the image that corresponds to the function to which the position also corresponds is visible to the user while the others of the surfaces are obscured from the user, and transition of the actuator from the one of the positions to the other of the positions results in the surface that is visible to the user in the one position becoming obscured from the user and further results in the surface that is visible to the user in the other position becoming visible to the user.

6. The device of claim 1 further comprising
a display screen (11) for displaying outputs of the functions to the user, and
a transparent touch-sensitive membrane (10) for receiving from the user inputs for the functions, the touch-sensitive membrane defining at least one actuator (13) for each of the functions, the at least one actuator for one function either (a) having a different corresponding label (18) for the one function than for another function, or (b) being a different actuator from the at least one actuator for another function; wherein
the plurality of physical display surfaces (201, 202; 311, 312) form a label-display arrangement (15) underlying the touch-sensitive membrane for displaying the labels (18) of the actuators (13) for the plurality of functions through the touch-sensitive membrane to the user, the plurality of physical display surfaces cooperating to define the labels for the actuators for the functions, the movable surfaces being movable to make the labels for the at least one actuator for any selected one of the functions visible to a user of the device through the touch-sensitive membrane while the labels for the actuators for others of the functions are obscured from the user,
each of the plurality of the positions of the actuator (19) also corresponds to a different positioning of the surfaces relative to the touch-sensitive membrane such that the labels for the at least one actuator for a function are made visible to the user through the touch-sensitive membrane while the labels for the actuators for the other functions are obscured from the user when the actuator is in the position that corresponds to said function, and
the controller (23) is responsive to each position of the actuator for configuring the touch-sensitive membrane to define the actuators that correspond to the function that corresponds to the position of the actuator and for causing the circuitry to effect the function that corresponds to the position of the actuator.

7. The device of claim 5 or 6 wherein:
each physical display surface (201; 202; 311; 312) comprises
a plurality of surface portions (203; 204; 302; 303; 304) forming the surface when aligned with each other; and
the label display arrangement further comprises
a linkage (205; 305, 306) connecting the actuator to at least some of the surface portions, the linkage translating operation of the actuator into motion of said at least some of the surfaces such that, in each of the positions of the actuator, the surface portions that form a different one of the surfaces are aligned with each other and face the touch-sensitive membrane in front, relative to the touch-sensitive membrane, of the surface portions that form the other surfaces.

8. The device of claim 5 or 6 wherein:
each physical display surface (201; 202) comprises
a plurality of surface portions (203; 204) positioned substantially adjacent each other and together forming the surface, each said surface portion having a surface portion counterpart among the surface portions of each of the other surfaces, and constituting with the surface portion counterparts a set of surface portions; and
the label display arrangement further comprises
a linkage (205) connecting the surface portions (204) of at least some of the surfaces (202) to the actuator, the linkage translating operation of the actuator into motion of at least some of the surface portions of each set relative to each other such that, in each of the positions of the actuator, all but a different one of the surface portions of each set is positioned behind, relative to the touch-sensitive membrane, either (a) said one surface portion of said set or (b) a surface portion of another set, such that said different one surface portion of each set is visible through the touch-sensitive membrane and all of the other surface portions of each set are obscured.

9. The device of claim 5 or 6 wherein
each physical display surface (311; 312) comprises
a plurality of surface portions (302; 303; 304) forming the surface when positioned substantially adjacent each other; and
the label display arrangement comprises
a plurality of rotatable members (301) each comprising a different one of the plurality of surface portions of each one of the surfaces, and
a linkage (305, 306) connecting the rotatable members to the actuator, the linkage translating operation of the actuator into rotation of the rotatable members such that, in each of the positions of the actuator, each of the members faces toward the touch-sensitive membrane the surface portion of a different one of the surfaces and faces away from the membrane the surface portions of the other surfaces.

10. The device of claim 6 wherein:
the plurality of physical display surfaces comprise
a plurality of physical display surfaces (201, 202; 311, 312) each bearing the labels (18) for the at least one actuator (13) for a different one of the functions, at least some of the surfaces (202; 311, 312) being movable to display any selected one of the surfaces through the touch-sensitive membrane to the user while others of the surfaces are obscured from the user; and
the actuator comprises
an actuator (19) manually operable by the user, coupled to the surfaces such that operation of the actuator translates into movement of at least some of the surfaces, the actuator having a plurality of positions (240, 241; 340, 341) each corresponding to a different one of the functions and each of the plurality of positions also corresponding to a different positioning of the surfaces relative to the touch-sensitive membrane such that the surface bearing the labels corresponding to a function is positioned to display its labels to the user through the touch-sensitive membrane while the labels borne by the other surfaces are obscured from the user when the actuator is in the position that corresponds to said function.
